# EUROPEAN PATENT SPECIFICATION

(11) **EP 2 069 679 B1**
(45) Date of publication and mention of the grant of the patent: **03.07.2019**
(21) Application number: 07835049.3
(22) Date of filing: 21.09.2007
(51) Int. Cl.: F16L 59/10, F16L 59/02, B32B 1/08

(54) **ADHESIVE TAPE FOR SEALING A JOINT IN AN INSULATION SYSTEM, AND METHOD FOR SEALING SUCH A JOINT**
KLEBEBAND ZUR ABDICHTUNG EINER VERBINDUNG IN EINEM ISOLATIONSSYSTEM UND VERFAHREN ZUR ABDICHTUNG EINER SOLCHEN VERBINDUNG
BANDE ADHÉSIVE POUR SCELLER UN JOINT DANS UN SYSTÈME D'ISOLATION ET PROCÉDÉ DE SCELLEMENT D'UN TEL JOINT

(30) Priority: 22.09.2006 SE 0601967
(43) Date of publication of application: 17.06.2009
(73) Proprietor: Saint-Gobain Isover, 92400 Courbevoie (FR)
(72) Inventor: TIGERFELDT, Staffan, 254 84 Helsingborg (SE)
(74) Representative: AWA Sweden AB
(86) International application number: PCT/SE2007/000827
(87) International publication number: WO 2008/036025

(56) References cited:
- WO-A1-2005/038330
- US-A- 4 780 347
- US-A- 5 417 901
- US-A- 5 441 083
- US-A- 5 520 009
- US-A- 5 690 147
- US-A- 5 690 147
- US-A1- 2001 031 329

## Description

### FIELD OF THE INVENTION

The present invention relates to an adhesive tape for sealing a joint in an insulation system, and a method for sealing a joint in an insulation system.

### BACKGROUND ART

In building and process technology it is quite common to insulate, for instance, pipes and containers. The insulation can take place by means of, for example, pipe shells, sheets or mats. A typical insulation consists of a thermally insulating material, such as mineral wool, which on its side facing the ambient air has a protective surface layer of plastic, paper or metal.

Even if a material which is normally considered tight, such as aluminium foil, is selected for the protective surface layer and this is arranged as a continuous enclosure of the thermally insulating material, a completely tight enclosure cannot be obtained. There are always openings, such as joints between neighbouring sheets or pipe shells, longitudinal slots to allow mounting of pipe shells on pipes or even physical damage, through which openings water vapour can penetrate into the insulation and on to the surface that is to be insulated. Another important source of penetration of the water vapour is diffusion. Diffusion occurs also through materials that are normally considered tight, that is also metal or plastic foils, and thus cannot be fully prevented.

When the temperature at the insulated surface is below the dew point of the ambient air, the water vapour is condensed. The problem is that the condensate cannot evaporate, which in the long run causes damage not only to the insulated surface in the form of, for example, corrosion, but also to the actual insulation.

There are established solutions on the market, which function well and provide for removal of the condensate.

A first example is given by US 5,441,083. This solution uses layers of a hygroscopic material on both sides of a thermally insulating material which is adapted to be arranged around, for instance, a pipe. The two layers are in contact with each other. In the case involving a pipe shell, the inner layer is arranged to surround the pipe and, with its respective free ends, protrude through the slot of the pipe shell to such an extent that its ends can be arranged against the outside of the pipe shell where they are exposed to the ambient air and form an evaporation surface. As a simpler variant of the above technique, it is also known to arrange, before mounting of the pipe shell, strips of a hygroscopic material which are equidistantly spaced from each other along the pipe, after which the pipe shell is mounted in such a manner that the free ends of the strips protrude through the slot of the pipe shell.

US 5 690 147 A discloses a heat-insulating assembly for insulating a surface of a tubular body relative to the ambient air.

Another example is defined in WO05/038330, which describes that the thermally insulating layer of the insulation system is provided with an outer laminate which comprises a vapour barrier and, connected thereto, a layer of a hygroscopic material.

Additional examples are known from US 4 780 347, US 5 417 901. US 5 520 009 and US 2001/031329.

It is known to combine the above described solutions with a sealing plastic tape which is fastened over the joints between neighbouring parts of the insulation systems, or over the slots that are inevitable in the pipe shells. This type of sealing is unfavourable since the adhesive tape is applied to the hygroscopic material and thus deteriorates the removal of condensate. Problems arise also in mounting of the adhesive tape. In fact the tape should adhere to the outer surface of the insulation system in a durable and neat manner while at the same time the adhesive tape is only allowed to interfere as little as possible with the evaporation surface which the hygroscopic material inside the system is adapted to form. This is a contradictory requirement since durable and neat mounting requires that the adhesive tape be in direct contact with the outside of the insulation system, which in turn means that the adhesive tape thus also covers any hygroscopic material which is arranged to protrude through the joint.

### OBJECT OF THE PRESENT INVENTION

The object of the present invention is to provide an improved adhesive tape for sealing joints in insulation systems.

The adhesive tape should be easy to apply and not have a detrimental effect on a possibly existing or integrated hygroscopic material in an insulation system.

The adhesive tape should in itself be able to replace or at least supplement the use of hygroscopic material in an insulation system.

The adhesive tape should also be easy to mount, without necessitating experience from mounting of prior art systems.

### SUMMARY OF THE INVENTION

To achieve the above objects and also other objects that have not been stated above, the present invention concerns an adhesive tape for sealing a joint in an insulation system according to claim 1, and also a method for sealing such joints according to claim 13.

A number of terms will be used throughout the text, which will be defined as follows. The term vapour barrier relates to a material which makes vapour diffusion and vapour convection difficult. The term hygroscopic material relates to a material which absorbs and transports water vapour and condensate and which emits water vapour due to the moisture of the ambient air in such a manner that equilibrium is achieved.

The invention relates to an adhesive tape for
sealing a joint in an insulation system, comprising
a first layer which forms a vapour barrier and is adapted to form an outside of the adhesive tape, a hygroscopic material which is supported by the first layer and, when applying the adhesive tape for sealing a joint in an insulation system, is adapted to be in contact with the joint, and at least one adhesive connecting portion which is arranged on an inside of the adhesive tape and which, when applying the adhesive tape, is adapted to adhere to the insulation system on at least one side of the joint.

As a result, an adhesive tape is provided, which allows absorption of condensate and moisture from the inside of the insulation system while at the same time it allows evaporation to the ambient air in a direction perpendicular to the direction of extension/plane of extension of the adhesive tape by moisture and condensate migration which occurs in the thickness direction of the adhesive tape. Depending on the extension of the hygroscopic material in the direction of extension/plane of extension of the adhesive tape, evaporation may also occur along the edge portions of the adhesive tape, that is in a direction that coincides with the direction of extension/plane of extension of the adhesive tape. In the latter case, the cross-sectional surface of the hygroscopic material forms an evaporation surface. The adhesive tape can replace the use of loose hygroscopic material, but also use of insulation systems with integrated hygroscopic material. In contrast to prior art adhesive tapes, the adhesive tape may be applied to insulation systems with integrated hygroscopic material without having a detrimental effect on evaporation. Moreover the adhesive tape is very easy to mount regardless of the form of the insulation system.

If the adhesive tape comprises more than one adhesive connecting portion, these can be arranged to adhere to the insulation system on both sides of the joint. If the adhesive tape adheres to the outside of the insulation system on both sides of a hygroscopic material arranged in the insulation system, the hygroscopic material of the adhesive tape will be in contact with the same and allow absorption and evaporation through the first vapour barrier forming layer of the adhesive tape.

The hygroscopic material may form a second layer, which second layer is supported by the first layer. Such a second layer can be a continuous or a partially continuous structure.

Alternatively, the hygroscopic material may be integrated with the first layer. Integration can be provided by, for example, casting, interweaving, melting or by using a binder. Integration should be arranged so that the hygroscopic material at least partially can make contact with the insulation system. The integration results in a form of reinforcement which increases the tear strength of the vapour barrier and, thus, the risk of outer damage to the adhesive tape.

The hygroscopic material can on the one hand be integrated with the first layer and, on the other hand, form a second layer supported by the vapour barrier, the second layer being in contact with the hygroscopic material in the first layer. With this solution, the hygroscopic material may have different structures or alternatively textures depending on where in the adhesive tape it is arranged. The hygroscopic material integrated with the first layer may, for example, have a non-continuous structure while the layer supported by the vapour barrier may, for example, have a continuous structure with a textured surface.

The hygroscopic material may at least partially have a non-continuous structure. One example of a non-continuous structure is a net-like structure. Moreover the hygroscopic material may extend over an entire surface facing away from the outside of the first layer.

When applying the adhesive tape, the hygroscopic material may be insertable into said joint in the insulation system. As a result, the hygroscopic material may be put in direct contact with the interior of the insulation system and even with the element exposed to condensate.

The hygroscopic material may have a free end which projects from the first layer and which, when applying the adhesive tape, is insertable into said joint in the insulation system. Alternatively, the hygroscopic material between said connecting portions may form a loop, which loop, when applying the adhesive tape, is insertable into said joint in the insulation system.

The first layer may have perforations via which the hygroscopic material is in contact with the ambient air. The perforations put the hygroscopic material in contact with the ambient air, whereby the condensate absorbed from the insulated surface and the thermally insulating material may evaporate.

The hygroscopic material may have evaporation surfaces arranged in the thickness direction of the adhesive tape, via which evaporation surfaces the hygroscopic material is in contact with the ambient air. These evaporation surfaces suitably consist of the cross-sectional surface of the hygroscopic material seen in its thickness direction.

According to another aspect, the invention relates to a method of sealing a joint in an insulation system, comprising applying over said joint an adhesive tape having a vapour barrier forming an outside and a hygroscopic material supported by the vapour barrier, in such a manner that said hygroscopic material is put in contact with the joint and so that the adhesive tape adheres to the insulation system on at least one side of said joint.

The method may comprise the step of inserting at least parts of the hygroscopic material supported by the vapour barrier into said joint.

The advantages allowed by the inventive adhesive tape have previously been discussed in connection with the invention according to claim 1, and will therefore not be repeated.

### DESCRIPTION OF DRAWINGS

The invention will now be described in more detail by way of example and with reference to the accompanying drawings, which illustrate a currently preferred embodiment.
Fig. 1 illustrates schematically a first embodiment of an adhesive tape according to the invention.
Fig. 2 shows the adhesive tape according to Fig. 1 applied to a pipe shell.
Fig. 3 shows a second embodiment of an adhesive tape according to the invention.
Figs 4a and 4b illustrate a third embodiment of an adhesive tape according to the invention.
Fig. 5 illustrates an adhesive tape according to Fig. 4 applied over the slot of a pipe shell.
Figs 6a and 6b illustrate a fourth embodiment of an adhesive tape according to the invention.
Figs 7a and 7b show examples of a perforated vapour barrier for increased evaporation.

### TECHNICAL DESCRIPTION

The inventive adhesive tape is adapted to seal a joint in an insulation system, which is adapted to be used for pipes, containers, ventilation ducts and like installation parts which periodically have an outer temperature which is below the dew point of the ambient air. In the following description, the generic term element will be used for these pipes, containers, ventilation ducts or installation parts. The term installation system concerns thermal insulation of said elements, which insulation may have a number of different geometric shapes, such as sheets, mats or shells.

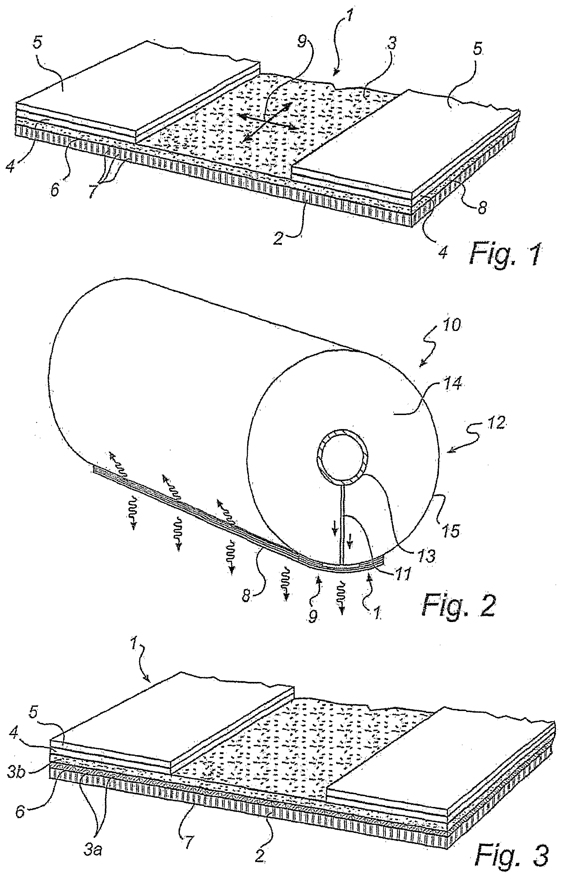

With reference to Fig. 1, a first embodiment of the inventive adhesive tape 1 is shown. It should be emphasised that all the material layers in Fig. 1 and the other figures are, for the sake of clarity, shown with highly exaggerated proportions.

The adhesive tape 1 comprises, starting from the outside, a vapour barrier 2, a hygroscopic material 3, a layer with two adhesive connecting portions 4 and a protective film 5 arranged on the connecting portions. The layers will be described individually below.

The vapour barrier 2 which forms the outside of the adhesive tape 1 makes vapour diffusion or vapour convection difficult. The vapour barrier 2 can be made of various materials, where the choice of material is a matter of, inter alia, the environment in which the insulation system is to act, current specified building standards, current fire control standards and, above all, costs. Examples of suitable materials are metal foil, plastic foil, paper with or without impregnation or laminates thereof. The vapour barrier 2 supports a layer of a hygroscopic material 3. The hygroscopic material 3 is preferably connected to the vapour barrier 2 by some kind of binder layer 6. The binder 6, which suitably is thermoplastic, may consist of a number of different substances, polyethylene (PE) being the most preferred one. It has surprisingly been found that in the boundary layer between the hygroscopic material 3 and the binder 6, pores are formed in the binder which have been found to improve capillary suction. The binder layer 6 should have such a thickness that the hygroscopic material 3 at least partially, and preferably along the major part of its surface which faces away from the vapour barrier 2, is free of binder 6.

The hygroscopic material 3 may consist of a number of different materials, such as glass fibre, wood, cardboard, activated clay, aluminium silicate or silica gel. The hygroscopic material 3 may also consist of a thermoplastic material such as polyester or nylon. The latter type of material means that the amount of thermoplastic binder can be reduced or excluded completely since the vapour barrier 2 and the hygroscopic material 3 can be made to bond to each other to form a laminate in the manufacture of the adhesive tape.

If the hygroscopic material 3 consists of glass fibre or a thermoplastic material, it is preferred if the hygroscopic material 3 has the form of a compressed, woven, nonwoven, spun, pleated or knitted structure. The hygroscopic material 3 may also consist of a hygroscopic paint.

In the embodiment shown in Fig. 1, the hygroscopic material 3 has a compressed, continuous structure. However, it will be appreciated that the structure of the hygroscopic material 3 illustrated in Fig. 1 is only one conceivable embodiment.

The vapour barrier 2 preferably comprises perforations 7 (schematically illustrated). The perforations 7 are arranged through the vapour barrier 2 in such a manner that they put the hygroscopic material 3 in contact with the ambient air, thereby allowing the condensate absorbed to evaporate. The perforations 7 have such a depth that they penetrate the vapour barrier 2 and an optional binder layer 6 between the vapour barrier 2 and the hygroscopic material 3.

The perforations 7 are preferably arranged with a frequency of 30-100 000 perforations/m², more preferred 200-50 000 perforations/m² and most preferred 1 000-30 000 perforations/m². The perforations 7 can be arranged in a regular or irregular pattern.

By the perforations 7 being arranged over the surface of the vapour barrier 2, perforations will, independently of the design and structure of the hygroscopic material 3, directly coincide with the hygroscopic material and thus form an opening for communication with the ambient air.

Depending on the thickness of the vapour barrier 2, the above described perforations 7 may be excluded. In the cases where the vapour barrier 2 consists of a metal or plastic foil, it contains, due to its manufacturing process, a varying degree of pinholes, which facilitate diffusion. By "pin holes" is meant defects in the material that appear as small microperforations. The thinner the foil, the more pin holes. The lower value 200 in the range 200-50 000 perforations/m² corresponds to the number of pin holes that arise in normal manufacture of an aluminium foil with a thickness of 7 µm. Pin holes have been found to give the surprising effect that they allow sufficient evaporation of condensate from the hygroscopic material. Defects in the form of pin holes can thus in this respect be equated with perforations.

In the embodiment illustrated, two connecting portions 4 with a self-adhering adhesive are arranged on the hygroscopic material 3. The connecting portions 4 extend in the longitunal direction of the adhesive tape and expose between them a portion of the hygroscopic material 3. A protective film 5 is arranged on each portion for protection of the adhesive. The protective film 5 suitably consists of a conventional silicone-coated strip of paper or plastic.

With reference to Fig. 2, the adhesive tape 1 according to Fig. 1 is shown applied over a slot 11 in an insulation system 10. The insulation system 10 consists of a pipe shell 12 which is mounted on a pipe 13. The pipe shell 12 which is of a conventional type has a body of a thermally insulating material 14 and, arranged on the outside, a surface layer 15. The adhesive tape 1 is arranged over the slot 11 so that the two connecting portions 4 are arranged on both sides of the slot 11. Moreover, the hygroscopic material 3 is in contact with the slot 11. It will be appreciated that the connecting portions 4 have such a small thickness as to establish a contact between the slot 11 and the hygroscopic material 3 of the adhesive tape 1 with the adhesive tape applied over the slot. Therefore the connecting portions 4 are illustrated merely most schematically. The adhesive tape 1 thus serves the following functions: protection against penetrating moisture and damp, absorption of moisture from the interior of the insulation system 10, allowing moisture to evaporate through the adhesive tape 1 and holding the pipe shell 12 in place.

In the following, the cooperation of the inventive adhesive tape 1 with an insulation system 10 will be described.

According to the description above, water from the environment penetrates into an insulation system 10 through inevitable openings in the surface layer 15. Moreover, water vapour penetrates by diffusion. If there is a difference in temperature in the insulation system 10 and the element respectively (in this case the pipe 13) relative to the ambient air, condensate forms. Condensate forms on the coolest surface, which usually is the surface of the element. By capillary action due to a difference in pore water pressure, the condensate strives towards an area with pressure below atmospheric, which area is to be found in or in connection with the hygroscopic material 3. In other words, the condensate migrates outwards through the thermally insulating material 14 where, by the contact with the hygroscopic material 3, it will be absorbed and spread in the same. Spreading is accelerated by the difference in the partial pressure, whereby the condensate strives towards the perforations 7 or pin holes arranged in the vapour barrier 2, where it will contact the ambient air and can evaporate perpendicular to the direction of extension/plane of extension 9 of the adhesive tape 1. Evaporation also occurs along the edges 8 of the adhesive tape in a direction which coincides with the direction of extension/plane of extension of the adhesive tape if the hygroscopic material 3 is exposed to the ambient air along the edges of the adhesive tape. In the latter case, the cross-sectional surface of the hygroscopic material is an evaporation surface. The insulation system 10 provided with the adhesive tape will, in use, obtain equilibrium between the amounts of diffused and evaporated water vapour.

Now referring to Fig. 3, a variant of the adhesive tape 1 shown in Fig. 1 will be illustrated. The adhesive tape 1 has the same basic composition as the one in Fig. 1, with the difference that the adhesive tape has two layers 3a 3b of hygroscopic material 3. The first layer 3a which is arranged next to the vapour barrier 2 consists of a coarse-mesh net-like structure which increases the tear strength of the adhesive tape while at the same time it cooperates with the second layer 3b in removing absorbed moisture. The first layer 3a is integrated with the vapour barrier 2 by a binder layer 6 which is arranged so that the first layer 3a is at least partially in contact with the second layer 3b. The second layer 3b consists of a fibrous or alternatively woven continuous layer which by its structure forms a large contact surface with a joint in an insulation system. Like in the embodiment shown in Fig. 1, two connecting portions 4 with a self-adhering adhesive are arranged on the second 3b outer layer of hygroscopic material 3. The connecting portions 4 extend in the longitudinal direction of the adhesive tape 1 and expose between them the hygroscopic material 3. A protective film 5 is arranged on each connecting portion 4.

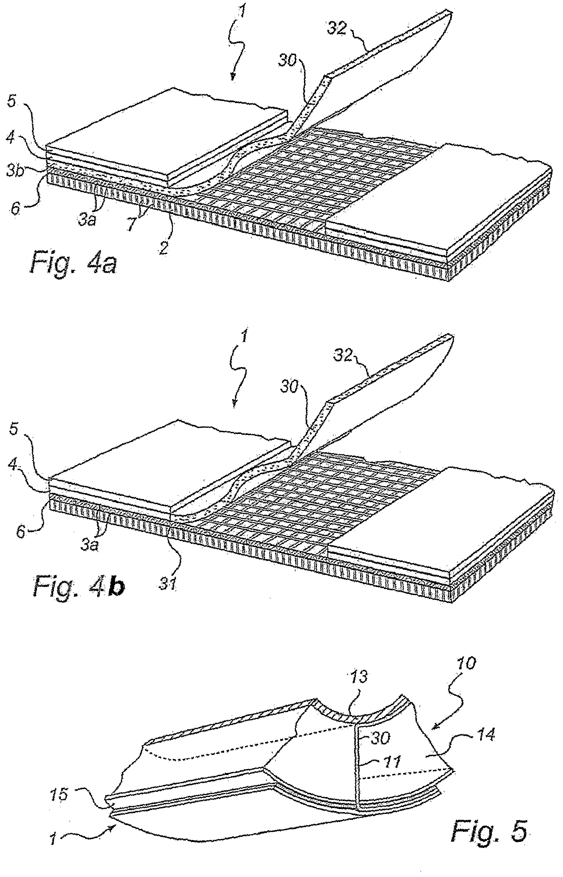

Another embodiment is illustrated with reference to Figs 4a and 4b. Like the adhesive tape according to Fig. 1, the adhesive tape 1 has an outside-forming vapour barrier 2. The vapour barrier 2 supports two layers 3a and 3b of hygroscopic material 3. The first layer 3a which is arranged next to the vapour barrier 2 consists of a coarse-mesh net-like structure which covers the entire surface of the adhesive tape 1 and which, like in previous embodiments, is integrated with the vapour barrier 2 by a binder 6. A second fibrous tight layer 3b of a hygroscopic material 3 is arranged on the first layer. The second layer 3b has, seen in cross-section transversely to the longitudinal direction of the adhesive tape 1, the form of a flap 30 which at one end is connected to the first layer 3a of hygroscopic material 3. The flap 30 may extend out to one longitudinal edge of the adhesive tape, as illustrated in Fig. 4a, or, as illustrated in Fig. 4b, merely have a narrow fastening surface 31 in connection with one connecting portion 4.

In the case where the first layer 3a of hygroscopic material 3 is excluded, the flap 30 is in direct contact with the vapour barrier 2. The opposite end of the flap 30 is free. Two adhesive connecting portions 4 are arranged in the longitudinal direction of the adhesive tape along two long sides of the adhesive tape so that they expose between them the free end 32 of the flap 30 of the hygroscopic material 3. The vapour barrier 2, the binder 6, the connecting portions 4 and the hygroscopic material 3 have been described above with reference to Fig. 1 and will therefore not be described once more in detail.

The flap 30 of the hygroscopic material 3 has, seen in the cross-section of the adhesive tape 1, such a width that, when mounting the adhesive tape, it can be inserted into the joint/slot 11 which the adhesive tape 1 is adapted to seal. This is illustrated schematically with reference to Fig. 5 which shows the adhesive tape applied to a pipe shell 12 which in turn surrounds a pipe 13. The flap 30 may be resembled to a wick which obtains a large contact surface against the thermally insulating material 14 inside the pipe shell 12. In the shown embodiment, the flap 30 has such a width that it is also arranged to be in contact with the pipe 13 surrounded by the pipe shell 12. In this embodiment the hygroscopic material 3 can absorb the condensate at the source thereof and divert and evaporate it to the ambient air through the vapour barrier 2 of the adhesive tape.

Such an adhesive tape is particularly suited for pipe shells and can advantageously be delivered in a premounted on a pipe shell, that is so that the adhesive tape, by and along one of its connecting portions, is mounted on one side of the slot of the pipe shell. When, in mounting, the pipe shell is forced in place over a pipe, the flap will simultaneously be pressed into the slot and put in contact with the pipe. Subsequently the protective strip is removed from the opposite connecting portion, after which the adhesive tape is made to adhere over the slot for sealing the same.

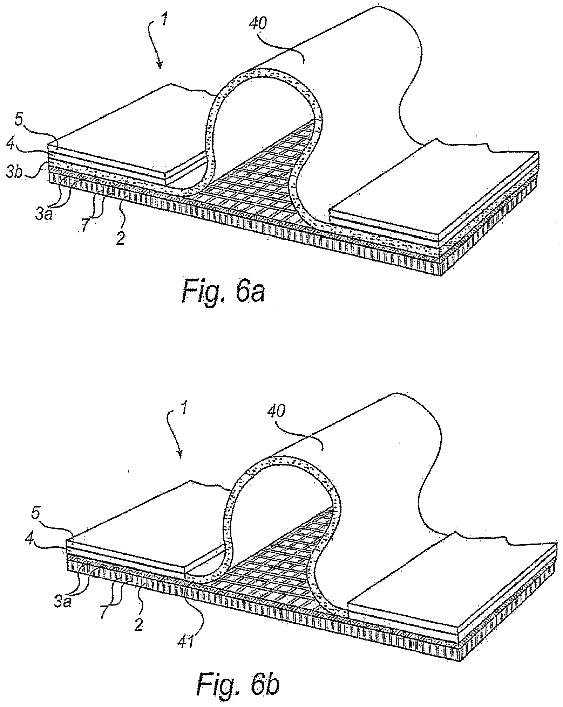

With reference to Fig. 6a and Fig. 6b, another embodiment of the adhesive tape 1 is shown. The embodiment corresponds to the embodiment that has been described above with reference to Figs 4a, 4b and 5, except that the hygroscopic material 3 in the portion between the connecting portions 4 forms a loop 40 instead of a flap. The loop 40 is formed by the hygroscopic material 3 in this portion having a width that exceeds the distance between the opposite edges of the two connecting portions 4. The loop shape has the advantage that the hygroscopic material 3 in the loop 40 can spring outward and fill the space in a joint/slot so as to increase the contact surface between the hygroscopic material and the thermally insulating material and the element, respectively. The loop 40 of hygroscopic material 3 can extend out to the longitudinal edges of the adhesive tape 1 as shown in Fig. 6a or, as shown in Fig. 6b, have merely narrow fastening surfaces 41 adjacent to the connecting portions 4.

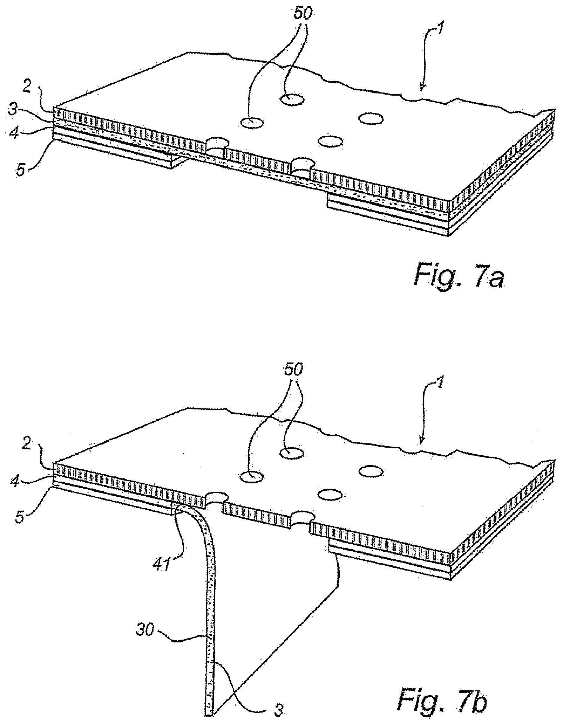

With reference to Figs 7a and 7b, a type of complement to the above described perforations and pin holes is shown. Here the vapour barrier 2 is provided with a hole pattern 50 which puts the hygroscopic material 3 in direct contact with the ambient air and, thus, increases the evaporation surface. The hole pattern 50 is suitably arranged by the vapour barrier 2 being provided with a number of holes which is suitable for the application. The embodiment according to Fig. 7b differs from the one in Fig. 7a by the latter comprising a flap 30 of hygroscopic material 3. Seen in the cross-section of the adhesive tape, the flap 30 has such a width that, in mounting of the adhesive tape, it can be inserted into the joint which is adapted to be sealed by the adhesive tape.

It will be appreciated by a person skilled in the art that the inventive adhesive tape can be used in combination with loose components of hygroscopic material.

## Claims

1. An adhesive tape for sealing a joint in an insulation system, comprising
a first layer which forms a vapour barrier (2) and is adapted to form an outside of the adhesive tape (1),
a hygroscopic material (3) which is supported by the first layer and, when applying the adhesive tape for sealing a joint in an insulation system, is adapted to be in contact with the joint, and
at least one adhesive connecting portion (4) which is arranged on an inside of the adhesive tape and which, when applying the adhesive tape, is adapted to adhere to the insulation system on at least one side of the joint.

2. An adhesive tape as claimed in claim 1, in which the adhesive connecting portions (4) are adapted to adhere to the insulation system on both sides of the joint.

3. An adhesive tape as claimed in claim 1, in which said hygroscopic material (3) forms a second layer, which second layer is supported by said first layer.

4. An adhesive tape as claimed in claim 1, in which said hygroscopic material (3) is integrated with said first layer.

5. An adhesive tape as claimed in claim 1, in which said hygroscopic material (3) on the one hand is integrated with the first layer and, on the other hand, forms a second layer supported by the vapour barrier (4), the second layer being in contact with the hygroscopic material in the first layer.

6. An adhesive tape as claimed in any one of the preceding claims, in which the hygroscopic material (3) at least partially has a non-continuous structure.

7. An adhesive tape as claimed in any one of the preceding claims, in which the hygroscopic material (3) extends over an entire surface facing away from the outside of the first layer.

8. An adhesive tape as claimed in any one of the preceding claims, in which the hygroscopic material (3), when applying the adhesive tape, is insertable into said joint in the insulation system.

9. An adhesive tape as claimed in any one of the preceding claims, in which the hygroscopic material (3) has a free end which projects from the first layer and which, when applying the adhesive tape, is insertable into said joint in the insulation system.

10. An adhesive tape as claimed in any one of claims 1-7, in which hygroscopic material (3) between said connecting portions (4) forms a loop (40), which loop, when applying the adhesive tape, is insertable into said joint in the insulation system.

11. An adhesive tape as claimed in any one of the preceding claims, in which the first layer has perforations (7) via which the hygroscopic material (3) is in contact with the ambient air.

12. An adhesive tape as claimed in any one of the preceding claims, in which the hygroscopic material (3) has evaporation surfaces arranged in the thickness direction of the adhesive tape, via which evaporation surfaces the hygroscopic material is in contact with the ambient air.

13. A method of sealing a joint in an insulation system, comprising applying over said joint an adhesive tape (1) having a vapour barrier (2) forming an outside and a hygroscopic material (3) supported by the vapour barrier, in such a manner that said hygroscopic material is put in contact with the joint and so that the adhesive tape (1) adheres to the insulation system on at least one side of said joint.

14. A method as claimed in claim 13, comprising the step of inserting at least parts of the hygroscopic material (3) supported by the vapour barrier (2) into said joint.

## Patentansprüche

1. Klebeband zum Abdichten einer Verbindung in einem Isolationssystem, umfassend
eine erste Schicht, die eine Dampfsperre (2) bildet und die angepasst ist, eine Außenseite des Klebebandes (1) zu bilden,
ein hygroskopisches Material (3), das von der ersten Schicht getragen wird und, wenn das Klebeband zum Abdichten einer Verbindung in einem Isolationssystem aufgebracht wird, angepasst ist, in Kontakt mit der Verbindung zu stehen, und
mindestens einen klebenden Verbindungsabschnitt (4), der auf einer Innenseite des Klebebandes angeordnet ist und der beim Aufbringen des Klebebandes so ausgebildet ist, dass er auf mindestens einer Seite der Verbindung an dem Isolationssystem anhaftet.

2. Klebeband nach Anspruch 1, wobei die klebenden Verbindungsabschnitte (4) so angepasst sind, dass sie auf beiden Seiten der Verbindung an dem Isolationssystem anhaften.

3. Klebeband nach Anspruch 1, wobei das hygroskopische Material (3) eine zweite Schicht bildet, wobei die zweite Schicht durch die erste Schicht getragen wird.

4. Klebeband nach Anspruch 1, wobei das hygroskopische Material (3) in die erste Schicht integriert ist.

5. Klebeband nach Anspruch 1, wobei das hygroskopische Material (3) einerseits in die erste Schicht integriert ist und andererseits eine zweite, von der Dampfsperre (4) getragene Schicht bildet, wobei die zweite Schicht mit dem hygroskopischen Material in der ersten Schicht in Kontakt steht.

6. Klebeband nach einem der vorhergehenden Ansprüche, wobei das hygroskopische Material (3) mindestens teilweise eine nichtkontinuierliche Struktur aufweist.

7. Klebeband nach einem der vorhergehenden Ansprüche, wobei sich das hygroskopische Material (3) über eine gesamte Oberfläche erstreckt, die von der Außenseite der ersten Schicht abgewandt ist.

8. Klebeband nach einem der vorhergehenden Ansprüche, wobei das hygroskopische Material (3), wenn das Klebeband aufgebracht wird, in die Verbindung in dem Isolationssystem einsetzbar ist.

9. Klebeband nach einem der vorhergehenden Ansprüche, wobei das hygroskopische Material (3) ein freies Ende aufweist, das aus der ersten Schicht herausragt und das, wenn das Klebeband aufgebracht wird, in die Verbindung in dem Isolationssystem einsetzbar ist.

10. Klebeband nach einem der Ansprüche 1 bis 7, wobei das hygroskopische Material (3) zwischen den Verbindungsabschnitten (4) eine Schlaufe (40) ausbildet, wobei die Schlaufe, wenn das Klebeband aufgebracht wird, in die Verbindung in dem Isolationssystem einsetzbar ist.

11. Klebeband nach einem der vorhergehenden Ansprüche, wobei die erste Schicht Perforationen (7) aufweist, über die das hygroskopische Material (3) mit der Umgebungsluft in Kontakt steht.

12. Klebeband nach einem der vorhergehenden Ansprüche, wobei das hygroskopische Material (3) Verdampfungsflächen aufweist, die in der Dickenrichtung des Klebebandes angeordnet sind, wobei über die Verdampfungsflächen das hygroskopische Material mit der Umgebungsluft in Kontakt steht.

13. Verfahren zum Abdichten einer Verbindung in einem Isolationssystem, umfassend das Aufbringen eines Klebebandes (1), das eine Dampfsperre (2), die eine Außenseite bildet, und ein hygroskopisches Material (3) aufweist, das von der Dampfsperre getragen wird, auf die Verbindung in einer derartigen Weise, dass das hygroskopische Material mit der Verbindung in Kontakt gebracht wird und so, dass das Klebeband (1) auf mindestens einer Seite der Verbindung an dem Isolationssystem anhaftet.

14. Verfahren nach Anspruch 13, umfassend den Schritt des Einsetzens von mindestens Abschnitten des hygroskopischen Materials (3), das von der Dampfsperre (2) getragen wird, in die Verbindung.

## Revendications

1. Bande adhésive pour sceller un joint dans un système d'isolation, comprenant
une première couche qui forme une barrière anti-vapeur (2) et qui est apte à former un extérieur de la bande adhésive (1),
un matériau hygroscopique (3) qui est supporté par la première couche est lors de l'application de la bande adhésive pour sceller un joint dans un système d'isolation, est apte à être en contact avec le joint, et
au moins une section de connexion adhésive (4) qui est disposée sur un intérieur de la bande adhésive et qui, lors de l'application de la bande adhésive, est apte à adhérer sur le système d'isolation sur au moins une face du joint.

2. Bande adhésive selon la revendication 1, dans laquelle les sections de connexion adhésives (4) sont aptes à adhérer sur le système d'isolation sur les deux faces du joint.

3. Bande adhésive selon la revendication 1, dans laquelle ledit matériau hygroscopique (3) forme une seconde couche, laquelle seconde couche est supportée par ladite première couche.

4. Bande adhésive selon la revendication 1, dans laquelle ledit matériau hygroscopique (3) est intégré dans ladite première couche.

5. Bande adhésive selon la revendication 1, dans laquelle ledit matériau hygroscopique (3) est d'une part intégré dans la première couche et forme d'autre part une seconde couche supportée par la barrière anti-vapeur (4), la seconde couche étant en contact avec le matériau hygroscopique dans la première couche.

6. Bande adhésive selon l'une quelconque des revendications précédentes, dans laquelle le matériau hygroscopique (3) a au moins partiellement une structure non continue.

7. Bande adhésive selon l'une quelconque des revendications précédentes, dans laquelle le matériau hygroscopique (3) s'étend sur une surface entière détournée de l'extérieur de la première couche.

8. Bande adhésive selon l'une quelconque des revendications précédentes, dans laquelle le matériau hygroscopique (3), lors de l'application de la bande adhésive, est insérable dans ledit joint dans le système d'isolation.

9. Bande adhésive selon l'une quelconque des revendications précédentes, dans laquelle le matériau hygroscopique (3) a une extrémité libre qui est en saillie depuis la première couche et qui, lors de l'application de la bande adhésive, est insérable dans ledit joint dans le système d'isolation.

10. Bande adhésive selon l'une quelconque des revendications 1 à 7, dans laquelle le matériau hygroscopique (3) forme une boucle (40) entre lesdites sections de connexion (4), laquelle boucle, lors de l'application de la bande adhésive, est insérable dans ledit joint dans le système d'isolation.

11. Bande adhésive selon l'une quelconque des revendications précédentes, dans laquelle la première couche comporte des perforations (7) par lesquelles le matériau hygroscopique (3) est en contact avec l'air ambiant.

12. Bande adhésive selon l'une quelconque des revendications précédentes, dans laquelle le matériau hygroscopique (3) comporte des surfaces d'évaporation disposées dans le sens de l'épaisseur de la bande adhésive, surfaces d'évaporation par lesquelles le matériau hygroscopique est en contact avec l'air ambiant.

13. Procédé de scellement d'un joint dans un système d'isolation, comprenant l'application sur ledit joint d'une bande adhésive (1) dotée d'une barrière anti-vapeur (2) formant un extérieur et d'un matériau hygroscopique (3) supporté par la barrière anti-vapeur, de manière à ce que ledit matériau hygroscopique soit mis en contact avec le joint et que la bande adhésive (1) adhère sur le système d'isolation sur au moins une face dudit joint.

14. Procédé selon la revendication 13, comprenant l'étape d'insertion d'au moins des parties du matériau hygroscopique (3) supporté par la barrière anti-vapeur (2) dans ledit joint.
